# EUROPÄISCHE PATENTSCHRIFT

(11) **EP 2 867 934 B1**
(45) Veröffentlichungstag und Bekanntmachung des Hinweises auf die Patenterteilung: **08.08.2018**
(21) Anmeldenummer: 13734960.1
(22) Anmeldetag: 18.06.2013
(51) Int. Cl.: H01M 2/10, B66C 1/44, H01M 10/0525, H01M 10/04

(54) **GREIFVORRICHTUNG FÜR BATTERIEMODULE**
GRIPPING DEVICE FOR BATTERY MODULES
DISPOSITIF DE PRÉHENSION POUR MODULES DE BATTERIE

(30) Priorität: 28.06.2012 DE 102012012819
(43) Veröffentlichungstag der Anmeldung: 06.05.2015
(73) Patentinhaber: Audi AG, 85045 Ingolstadt (DE)
(72) Erfinder: AVDIC, Reuf, 85055 Ingolstadt (DE); HINTERBERGER, Michael, 85055 Ingolstadt (DE); SCHMIDT, Jörg, 85057 Ingolstadt (DE)
(74) Vertreter: Herbst, Matthias Heinz
(86) Internationale Anmeldenummer: PCT/EP2013/001800
(87) Internationale Veröffentlichungsnummer: WO 2014/000871

(56) Entgegenhaltungen:
- WO-A1-2007/073279
- US-A- 1 219 979
- US-A1- 2002 109 363
- US-A1- 2007 046 048

## Beschreibung

Die Erfindung betrifft eine Greifvorrichtung für Batteriemodule nach dem Oberbegriff des Patentanspruchs 1.

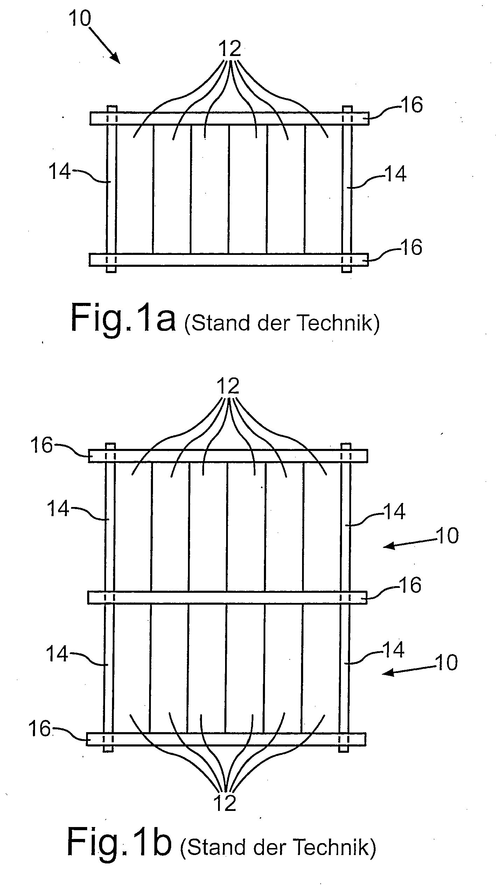

Die US 2 638 490 A1 beschreibt eine Hebevorrichtung für Batterien. Diese weist einen Querbalken auf, an dem seitlich zwei Bandeisen angeordnet sind. Zwischen den Bandeisen sind Abstandshülsen auf dem Querbalken angeordnet, um die Bandeisen in einem definierten Abstand zu halten. Dabei können die Bandeisen durch seitlich auf den Querbalken aufgeschraubte Muttern zwischen jeweils einer Mutter und einer Abstandshülse fixiert werden. Die Bandeisen weisen an ihrem unteren Ende jeweils ein Auflager in Form einer Platte auf. Des Weiteren sind die Bandeisen leicht flexibel, so dass die Auflager an einem oberen, leicht ausstehenden Rand einer Batterie vorbeigeführt werden können und unter diesem Rand einhaken. Weiterhin ist zwischen den beiden Bandeisen eine parallel zum Querbalken verlaufende Querstange vorgesehen. Durch zwei Muttern, die seitlich auf die Querstange aufgeschraubt werden können, können die Bandeisen zur Mitte hin gespannt werden, um beim Anheben der Batterie mehr Stabilität zu gewährleisten und ein Wegrutschen der Batterie zu verhindern. Die Batterien, die mit dieser Vorrichtung gehoben werden sollen, weisen dabei einen oberen Rand auf, der seitlich über die Batterie hinaussteht, so dass die Auflager unter diesem Rand einhaken können. Weiterhin weist dieser Rand eine Aussparung auf, die für die Bandeisen vorgesehen ist. Für andersartig ausgebildete Batterien, wie beispielsweise Lithium-Ionen Batteriemodule, ist diese Hebevorrichtung ungeeignet. US1219979 und US7240934 beschreiben auch Hebevorrichtungen für Batterien. Derartige Lithium-Ionen Batteriemodule 10 oder Stacks sind schematisch in Fig. 1a und Fig. 1b dargestellt. Die Herstellung von Lithium-Ionen-Batterien erfolgt prinzipiell durch elektrische Verschaltung mehrerer Lithium-Ionen-Zellen, mit dem Ziel der Erhöhung der Nennspannung und/oder Kapazität bzw. des Energieinhalts. Somit umfasst ein solches Modul 10, wie in Fig. 1a, in der Regel eine Mehrzahl an Lithium-Ionen Zellen 12. Diese Zellen 12 müssen mechanisch verpresst bzw. verspannt werden, um eine elektrochemische Schädigung bzw. Zerstörung zu verhindern. Dabei ist ein verpresstes Modul 10 in Spannrichtung von zwei Pressplatten 14 begrenzt und seitlich in zwei Seitenrahmen 16 mit entsprechenden Nuten verspannt bzw. eingehakt. In einem Produktionsablauf beispielsweise müssen diese Module 10 bewegt und/oder gegriffen werden. Des Weiteren wird ein Seitenwandrahmen 16 entfernt, um das Modul 10 in ein bereits montiertes ineinander zu stecken (vgl. Fig. 1b).

Daraus ergeben sich bestimmte Anforderungen an ein geeignetes Handlingsgerät für Lithium-Ionen-Batterien. Eine Forderung während dieser Handlingsvorgänge ist die Vermeidung von Kurzschlüssen der Batteriezellen, insbesondere während des Heranführens der Vorrichtung bzw. des Greifgeräts. Außerdem gilt es das Modul schnell und formschlüssig greifen zu können und gleichzeitig die erlaubte Maximalkraft für die Zellen nicht zu überschreiten. Ein weiteres Problem ist beispielsweise, dass Module ab z.B. 30 Zellen die Neigung haben durchzuhängen, da die Betriebsklemmkraft der Module nicht hoch genug ist.

Im heutigen Stand der Technik steht eine Variantenvielfalt an Betriebsmitteln zum Greifen, Heben oder Spannen solcher Batterie-Module zur Verfügung, jedoch gibt es keine Vorrichtung, die oben genannten Anforderungen in zufriedenstellender Weise genügt, was ein unsicheres Handling in Bezug auf Lithium-Ionen-Batterien zur Folge hat.

Aufgabe der vorliegenden Erfindung ist es daher, eine Greifvorrichtung bereitzustellen, die ein besseres und sichereres Greifen eines solchen BatterieModuls ermöglicht.

Diese Aufgabe wird durch eine Greifvorrichtung mit den Merkmalen des Patentanspruchs 1 gelöst.

Vorteilhafte Ausgestaltungen der Erfindung finden sich in den abhängigen Ansprüchen.

Die erfindungsgemäße Greifvorrichtung für Batteriemodule umfasst einen Querbalken mit einer Längserstreckungsrichtung, ein erstes Greifelement, das ein erstes Befestigungselement und eine erste Druckplatte umfasst, und ein zweites Greifelement, das ein zweites Befestigungselement und eine zweite Druckplatte umfasst. Dabei sind die Befestigungselemente derart ausgebildet, dass die Greifelemente am Querbalken befestigbar sind, wobei die Greifelemente derart ausgebildet sind, dass ein sich zwischen den Greifelementen befindliches Batteriemodul greifbar ist. Beim Greifen eines Batteriemoduls ist eine erste Seitenfläche des Batteriemoduls mittels der ersten Druckplatte kontaktierbar und eine zweite Seitenfläche des Batteriemoduls, die der ersten Seitenfläche gegenüberliegt, mittels der zweiten Druckplatte kontaktierbar. Darüber hinaus sind die Greifelemente und der Querbalken derart ausgebildet, dass die Greifelemente entlang der Längserstreckungsrichtung des Querbalkens verschiebbar sind und eine Position der Greifelemente entlang der Längserstreckungsrichtung des Querbalkens fixierbar ist. Des Weiteren umfasst wenigstens das erste Greifelement mindestens ein erstes Betätigungselement, durch dessen Betätigung die erste Druckplatte des ersten Greifelements in ihrer Position gegenüber dem ersten Befestigungselement derart verstellbar ist, dass Druck auf die erste und zweite Seitenfläche eines sich zwischen der ersten und zweiten Druckplatte befindenden Batteriemoduls ausübbar ist.

Dadurch dass die Greifelemente entlang des Querbalkens verschiebbar sind, können die Greifelemente auf sehr vorteilhafte Weise auf beliebige Batteriemodulgrößen angepasst werden. Somit ist es möglich zum Heben von Batteriemodulen unterschiedlicher Größe eine einzige Greifvorrichtung zu verwenden. Darüber hinaus lässt sich über die Betätigung des Betätigungselements Druck über die Druckplatten auf die Seitenflächen eines Batteriemoduls ausüben, wodurch die Batteriemodule gleichzeitig in ihrer Spannrichtung gespannt werden können. Die dadurch auf ein Batteriemodul ausgeübte Spannkraft, kann dabei so bemessen sein, dass das Batteriemodul mittels der Greifvorrichtung anhebbar ist, also dass die daraus resultierende Reibungskraft zwischen den Seitenflächen eines Batteriemoduls und den Druckplatten zum einen größer ist als die Gewichtskraft des Batteriemoduls, so dass ein Anheben des Batteriemoduls möglich ist, und zum Anderen kann bevorzugt der auf die Seitenflächen eines Batteriemoduls ausübbare Druck über die Druckplatten so bemessen sein, dass ein Durchhängen von Batteriemodulen, die aus vielen Zellen bestehen, verhindert werden. Somit wird es durch die Erfindung ermöglicht ein Batteriemodul schnell und formschlüssig greifen zu können, mehrere unterschiedlich Große Batteriemodule mit der selben Greifvorrichtung greifen und heben zu können und selbst bei Batteriemodulen mit vielen Zellen eine ausreichend hohe Klemmkraft auf das Batteriemodul aufbringen zu können. Die Greifvorrichtung vereint somit die Funktionen Greifen und Spannen auf sehr einfache und vorteilhafte Weise und gewährleistet somit ein sicheres und zeitsparendes Handling von Batteriemodulen.

Bei einer vorteilhaften Ausgestaltung der Erfindung ist durch Betätigung des ersten Betätigungselements der ausübbare Druck auf ein Batteriemodul in diskreten Schritten einstellbar. Diese diskreten Schritte können dabei so bemessen sein, dass ein ausreichend genaues Spannen der Batteriemodule möglich ist. Vorteilhafterweise kann durch diese Einstellungsmöglichkeit über das erste Betätigungselement eine gute Anpassung an die Klemmkraftanforderungen von Batteriemodulen unterschiedlicher Größe erfolgen.

Bei der Erfindung umfasst das erste Greifelement ein zweites Betätigungselement, durch dessen Betätigung die erste Druckplatte des ersten Greifelements in ihrer Position gegenüber dem ersten Befestigungselement derart verstellbar ist, dass Druck auf die erste und zweite Seitenfläche eines sich zwischen der ersten und zweiten Druckplatte befindenden Batteriemoduls ausübbar ist, wobei der ausübbare Druck mittels Betätigung des zweiten Betätigungselements kontinuierlich einstellbar ist. Diese vorteilhafte Ausgestaltungsvariante ermöglicht es beispielsweise das erste Betätigungselement, durch das der ausübbare Druck in diskreten Schritten einstellbar ist, zum Vorspannen des Batteriemoduls in Form einer Schnellverstellung genutzt werden, während das zweite Betätigungselement für eine Feineinstellung des ausübbaren Drucks oder der Klemmkraft auf ein Batteriemodul genutzt werden kann. Gerade die Kombination des ersten und des zweiten Betätigungselements ist daher besonders vorteilhaft, da so ein besonders schnelles Spannen und Greifen eines Batteriemoduls durch die Schnellverstellung des ersten Betätigungselements ermöglicht wird und gleichzeitig ein sehr präzises Einstellen der für das jeweilige Batteriemodul benötigten Klemmkraft durch das zweite Betätigungselement.

Bei einer weiteren vorteilhaften Ausgestaltung der Erfindung umfasst das erste Greifelement einen Stempel und mindestens eine Feder, wobei die Feder zwischen dem Stempel und der ersten Druckplatte angeordnet ist und der Stempel derart mit dem ersten und zweiten Betätigungselement gekoppelt ist, dass mittels Betätigung des ersten und/oder zweiten Betätigungselements der Stempel in seiner Position gegenüber dem ersten Befestigungselement derart verschiebbar ist, dass durch den Stempel Druck auf die Feder ausübbar ist und durch die Feder Druck auf die erste Druckplatte ausübbar ist.

Dabei können auch mehrere Federn oder ein Federpaket zwischen dem Stempel und der ersten Druckplatte vorgesehen sein. Diese Feder oder das Federpaket dient dabei zur Maximalkraftbegrenzung beim Greifen eines Batteriemoduls.

Bevorzugt ist dabei eine Federhärte der mindestens einen Feder derart bemessen ist, dass eine Kraft, die mittels der ersten Druckplatte auf die erste Seite eines Batteriemoduls ausübbar ist, kleiner ist als ein vorgebbarer Wert.

So kann auf sehr vorteilhafte Weise gewährleistet werden, dass die erlaubte Maximalkraft auf die Zellen eines zu hebenden Batteriemoduls nicht überschritten wird. Dies ist dabei sowohl bei der Betätigung des ersten Betätigungselements als auch bei der Betätigung des zweiten Betätigungselements sichergestellt.

Des Weiteren kann das erste Betätigungselement als Hebel ausgebildet sein, der rastend betätigbar ist, so dass durch Betätigung des Hebels die erste Druckplatte in ihrer Position verstellbar und die Position fixierbar ist. Durch die Ausbildung als Hebel ist eine besonders einfache und handhabungsfreundliche Bedienung, insbesondere zum Zweck einer Schnellverstellung, möglich.

Das zweite Betätigungselement kann als Rad ausgebildet sein, durch dessen Drehen die erste Druckplatte des ersten Greifelements in ihrer Position gegenüber dem ersten Befestigungselement verstellbar ist. Insbesondere kann das Rad ein Rändelrad sein, um auf besonders vorteilhafte Weise eine möglichst feinfühlige Einstellung eines Spannmaßes zu ermöglichen.

Weiterhin kann die erste und/oder die zweite Druckplatte eine Ausprägung aufweisen, die in ein entsprechendes Gegenstück einer zu kontaktierenden Seitenfläche eines zu greifenden Batteriemoduls einfügbar ist. Diese Ausprägung kann beispielsweise als ein oder mehrere Führungsbolzen ausgestaltet sein. Dieser Führungsbolzen kann beim Greifen eines Batteriemoduls, insbesondere durch Betätigen des ersten Betätigungselements in vorgesehene Bohrungen der Seitenfläche des Batteriemoduls eingeführt werden.

Wird die Greifvorrichtung zum Heben von Batteriemodulen mit seitlich angeordneten Pressplatten verwendet, so können sich diese Bohrungen in der pressplatte des Batteriemoduls befinden. Alternativ können die Drückplatten auch Ausprägungen in Form von Vertiefungen aufweisen, um beispielsweise Batteriemodule zu greifen und zu heben, die als Erhebungen oder Bolzen ausgebildeten Ausprägungen an den Seitenflächen aufweisen und in die Vertiefungen der Druckplatten einfügbar sind. Die Ausbildung der Druckplatten mit einer Ausprägung stellt somit mehr Stabilität und Sicherheit beim Greifen und Heben eines Batteriemoduls bereit.

Bei einer vorteilhaften Ausgestaltung der Erfindung weist die Greifvorrichtung zumindest an der beim Heben eines Batteriemoduls mit einer Seitenfläche des Batteriemoduls kontaktierbaren Seite der ersten und/oder zweiten Druckplatte eine elektrische Isolierung auf. Dadurch können Kurzschlüsse der Batteriezellen vermieden werden, insbesondere während des Heranführens der Greifvorrichtung. So kann die Greifvorrichtung auch den Forderungen nach HV-Sicherheit und Kurzschlussschutz gerecht werden.

Nachfolgend werden bevorzugte Ausführungsformen der Erfindung unter Bezug auf die Zeichnung näher beschrieben. Dabei zeigen:
- Fig. 1a: eine schematische Darstellung eines Batteriemoduls mit einer Mehrzahl an Batteriezellen gemäß dem Stand der Technik;
- Fig. 1b: eine schematische Darstellung zweier ineinandergesteckter Batteriemodule gemäß dem Stand der Technik;
- Fig. 2: eine schematische Darstellung einer Greifvorrichtung mit einem Querbalken und zwei verschiebbar daran angeordneten Greif-elementen gemäß einem Ausführungsbeispiel der Erfindung; und
- Fig. 3: eine schematische Darstellung eines Greifelements mit einer Spanneinheit einer Greifvorrichtung gemäß einem Ausführungsbeispiel der Erfindung.

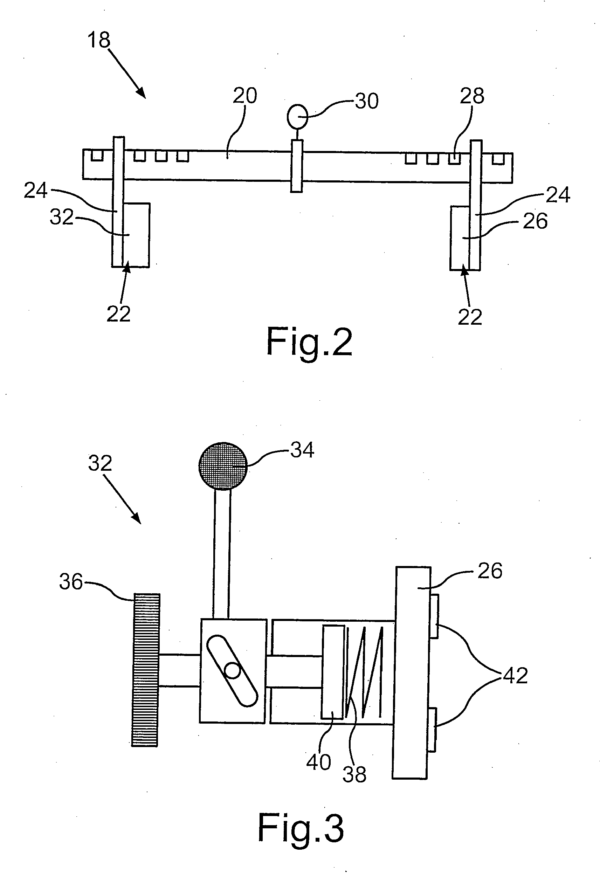

Fig. 2 zeigt eine schematische Darstellung einer Greifvorrichtung 18 für Batteriemodule 10 gemäß einem Ausführungsbeispiel der Erfindung. Diese umfasst einen Querbalken 20, insbesondere eine Quertraverse, und zwei Greifelemente 22, die jeweils mittels eines Befestigungselements 24 am Querbalken 20 angeordnet sind. Dabei können die Greifelemente 22 in Längserstreckungsrichtung des Querbalkens 20 verschoben und fixiert werden. Dies kann beispielsweise mittels Rastung 28 bewerkstelligt werden, so dass die Greifelemente 22 an der gewünschten Position des Querbalkens 20 einrastbar sind. Weiterhin weisen die Greifelemente 22 jeweils eine Druckplatte 26 auf, mittels welchen Druck auf ein zu greifendes Batteriemodul 10 ausgeübt werden kann.

In der Mitte des Querbalkens 20 ist eine Aufhängung 30 angeordnet. Durch Ausüben einer Zugkraft auf diese Aufhängung 30 kann die Greifvorrichtung 18 mit dem gegriffenen Batteriemodul 10 gehoben werden. Die Rastung 28 des Querbalkens 20 ist dabei bevorzugt symmetrisch zur Mitte, insbesondere zur Aufhängung 30 ausgebildet, um ein ausbalanciertes Heben eines Batteriemoduls 10 zu ermöglichen. Durch die Verschiebbarkeit der Greifelemente 22 ist die Greifvorrichtung 18 auf vorteilhafte Weise zum Greifen von Batteriemodulen 10 unterschiedlicher Größe geeignet, da der Abstand der Greifelemente 22 sehr leicht auf die Größe eines Batteriemoduls 10 angepasst werden kann. Des weiteren weist zumindest eines der Greifelemente 22 eine Spanneinheit 32 auf, welche in Fig. 3 genauer beschrieben ist. Das andere Greifelement 22 könnte ebenfalls eine Spanneinheit 32 umfassen, da aber zum Spannen eine Spanneinheit 32 ausreichend ist, umfasst das andere Greifelement 22 bevorzugt eine als Festanschlag ausgebildete Druckplatte 26.

Fig. 3 zeigt eine schematische Darstellung einer Spanneinheit 32 eines Greifelements 22 einer Greifvorrichtung 18 gemäß einem Ausführungsbeispiel der Erfindung. Die Spanneinheit 32 umfasst hierbei ein erstes Betätigungselement 34, das bevorzugt als Hebel ausgebildet ist, und ein zweites Betätigungselement 36, das als Rändelrad ausgebildet sein kann. Durch eine jeweilige Betätigung dieser Betätigungselemente 34 und 36 kann die Druckplatte 26 in ihrer Position gegenüber dem Befestigungselement 24, insbesondere in Richtung des zu greifenden Batteriemoduls 10, verstellt werden. Bevorzugt ist dafür eine Kopplung über einen Stempel 40 und eine Feder 38 oder ein Federpaket vorgesehen, so dass durch eine jeweilige Betätigung der Betätigungselemente 34 und 36 der Stempel 40 in seiner Position, insbesondere ebenfalls in Richtung des zu greifenden Batteriemoduls 10, verstellbar ist und durch Verstellung dieses Stempels 40 Druck auf die Feder 38 ausübbar ist. Die Feder 38 wiederum überträgt diesen Druck auf die Druckplatte 26, die sich dadurch in Richtung des zu greifenden Batteriemoduls 10 verschiebt und diesen Druck auf die Seitenflächen eines zwischen dem beiden Greifelementen 22 der Greifvorrichtung 18 befindlichen Batteriemoduls 10 übertragen kann. Dabei ist das erste Betätigungselement 34, insbesondere der Hebel, für eine Schnellverstellung vorgesehen, mit dem zunächst ein Vorspannen eines Batteriemoduls oder eine grobe Einstellung auf die Größe des Batteriemoduls möglich ist. Der Hebel kann dabei rastend betätigt werden, so dass eine Position der Druckplatte 22 durch Einrasten fixierbar ist. Weiterhin kann die Verstellung der Druckplatte 22 durch Betätigung des Hebels in diskreten Schritten erfolgen, was für eine zunächst grobe Vorspannung eines Batteriemoduls 10 ausreichend ist und eine effektive und schnelle Einstellung ermöglicht. Für die Feineinstellung der Klemmkraft ist das Rändelrad vorgesehen. Durch Drehen dieses Rads kann ebenfalls die Druckplatte 22 in ihrer Position verstellt werden. Weiterhin ermöglicht ein kontinuierliches Drehen des Rändelrads auch ein eine kontinuierliche Einstellung der Spannkraft auf ein Batteriemodul 10. Dadurch wird eine besonders präzise und feinfühlige Einstellung der Klemmkraft auf das Batteriemodul 10 ermöglicht. Besonders vorteilhafterweise kann so die Klemmkraft individuell auf jede Batteriemodulgröße eingestellt werden, d.h. es kann zum einen eine ausreichend große Klemmkraft bereitgestellt werden, die ein Heben des Batteriemoduls 10 je nach Gewicht des Batteriemoduls 10 ermöglicht, und zusätzlich verhindert, dass größere Batteriemodule 10, insbesondere solche ab 30 Batteriezellen, durchhängen, und gleichzeitig kann die Klemmkraft so feinfühlig eingestellt werden, dass gewährleistet wird, dass eine Maximalkraft, die auf die Batteriezellen 12 ausgeübt werden darf, nicht überschritten wird. Um dabei noch zusätzlich für Sicherheit zu sorgen, ist die Feder 38 oder das Federpaket vorgesehen, die bei entsprechender Ausbildung ihrer Federhärte sicherstellt, dass eine vorgegebene Maximalkraft nicht überschritten wird. Um darüber hinaus beim Heben noch für mehr Stabilität zu sorgen, können die Druckplatten 22 Ausprägungen 42 in Form von Führungsbolzen aufweisen. Diese Bolzen können, beispielsweise beim Schnellverstellen durch Betätigung des Hebels, in dafür vorgesehene Aussparungen oder Bohrungen des Batteriemoduls 10, insbesondere in Borungen der an Seitenflächen von Batteriemodulen 10 angeordneten Pressplatten 14 eingeführt werden. Um der Forderung nach HV-Sicherheit und Kurzschlussschutz gerecht zu werden, können der Festanschlag und die Spanneinheit 32 nach außen hin elektrisch isoliert ausgeführt sein.

Insgesamt wird so eine Greifvorrichtung für Batteriemodule bereitgestellt, die es ermöglicht, ein Batteriemodul schnell und formschlüssig zu greifen, das Modul gleichzeitig zu spannen und das das Spannmaß feinfühlig zu verstellen. Somit wird gewährleistet, dass die erlaubte Maximalkraft für die Zellen nicht überschritten wird. Des Weiteren können mehrere Stackgrößen mit dem gleichen Handlingsgerät bedient werden und auch größere Batteriemodule können ohne durchzuhängen gegriffen und gehoben werden, da die Greifvorrichtung nach dem Greifen noch entsprechend weit verstellt werden kann um eine ausreichend hohe Klemmkraft auf einen großen Stack aufbringen zu können. So kann ein sicheres und zeitsparendes Handlingsgerät bereitgestellt werden, das die Funktionen Greifen und Spannen im gleichen Betriebsmittel vereint.

## Patentansprüche

1. Greifvorrichtung (18) für Batteriemodule (10), aufweisend einen Querbalken (20) mit einer Längserstreckungsrichtung, ein erstes Greifelement (22), das ein erstes Befestigungselement (24) und eine erste Druckplatte (26) umfasst, und ein zweites Greifelement (22), das ein zweites Befestigungselement (24) und eine zweite Druckplatte (26) umfasst, wobei die Befestigungselemente (24) derart ausgebildet sind, dass die Greifelemente (22) am Querbalken (20) befestigbar sind, wobei die Greifelemente (22) derart ausgebildet sind, dass ein sich zwischen den Greifelementen (22) befindliches Batteriemodul (10) greifbar ist, wobei beim Greifen eines Batteriemoduls (10) eine erste Seitenfläche des Batteriemoduls (10) mittels der ersten Druckplatte (26) kontaktierbar ist und eine zweite Seitenfläche des Batteriemoduls (10), die der ersten Seitenfläche gegenüberliegt, mittels der zweiten Druckplatte (26) kontaktierbar ist, wobei die Greifelemente (22) und der Querbalken (20) derart ausgebildet sind, dass die Greifelemente (22) entlang der Längserstreckungsrichtung des Querbalkens (20) verschiebbar sind und eine Position der Greifelemente (22) entlang der Längserstreckungsrichtung des Querbalkens (20) fixierbar ist und dass wenigstens das erste Greifelement (22) mindestens ein erstes Betätigungselement (34) umfasst, durch dessen Betätigung die erste Druckplatte (26) des ersten Greifelements (22) in ihrer Position gegenüber dem ersten Befestigungselement (24) derart verstellbar ist, dass Druck auf die erste und zweite Seitenfläche eines sich zwischen der ersten und zweiten Druckplatte (26) befindenden Batteriemoduls (10) ausübbar ist,
**dadurch gekennzeichnet, dass**
das erste Greifelement (22) ein zweites Betätigungselement (36) umfasst, durch dessen Betätigung die erste Druckplatte (26) des ersten Greifelements (22) in ihrer Position gegenüber dem ersten Befestigungselement (24) derart verstellbar ist, dass Druck auf die erste und zweite Seitenfläche eines sich zwischen der ersten und zweiten Druckplatte (26) befindenden Batteriemoduls (10) ausübbar ist, wobei der ausübbare Druck mittels Betätigung des zweiten Betätigungselements (36) kontinuierlich einstellbar ist.

2. Greifvorrichtung (18) nach Anspruch 1,
**dadurch gekennzeichnet, dass**
durch Betätigung des ersten Betätigungselements (34) der ausübbare Druck auf ein Batteriemodul (10) in diskreten Schritten einstellbar ist.

3. Greifvorrichtung (18) nach einem der vorhergehenden Ansprüche,
**dadurch gekennzeichnet, dass**
das erste Greifelement (22) einen Stempel (40) und mindestens eine Feder (38) umfasst, wobei die Feder (38) zwischen dem Stempel (40) und der ersten Druckplatte (26) angeordnet ist, wobei der Stempel (40) derart mit dem ersten und zweiten Betätigungselement (24; 36) gekoppelt ist, dass mittels Betätigung des ersten und/oder zweiten Betätigungselements (24; 36) der Stempel (40) in seiner Position gegenüber dem ersten Befestigungselement (24) derart verschiebbar ist, dass durch den Stempel (40) Druck auf die Feder (38) ausübbar ist und durch die Feder (38) Druck auf die erste Druckplatte (26) ausübbar ist.

4. Greifvorrichtung (18) nach Anspruch 3,
**dadurch gekennzeichnet, dass**
eine Federhärte der mindestens einen Feder (38) derart bemessen ist, dass eine Kraft, die mittels der ersten Druckplatte auf die erste Seite eines Batteriemoduls (10) ausübbar ist, kleiner ist als ein vorgebbarer Wert.

5. Greifvorrichtung (18) nach einem der vorhergehenden Ansprüche,
**dadurch gekennzeichnet, dass**
das erste Betätigungselement (34) als Hebel ausgebildet ist, der rastend betätigbar ist, so dass durch Betätigung des Hebels die erste Druckplatte (26) in ihrer Position verstellbar und die Position fixierbar ist.

6. Greifvorrichtung(18) nach einem der vorhergehenden Ansprüche,
**dadurch gekennzeichnet, dass**
das zweite Betätigungselement (36) als Rad ausgebildet ist, durch dessen Drehen die erste Druckplatte (26) des ersten Greifelements (22) in ihrer Position gegenüber dem ersten Befestigungselement (24) verstellbar ist.

7. Greifvorrichtung (18) nach einem der vorhergehenden Ansprüche,
**dadurch gekennzeichnet, dass**
die erste und/oder die zweite Druckplatte (26) eine Ausprägung (42) aufweist, die in ein entsprechendes Gegenstück einer zu kontaktierenden Seitenfläche eines zu greifenden Batteriemoduls (10) einfügbar ist.

8. Greifvorrichtung (18) nach einem der vorhergehenden Ansprüche,
**dadurch gekennzeichnet, dass**
die Greifvorrichtung (18) zumindest an der beim Heben eines Batteriemoduls (10) mit einer Seitenfläche des Batteriemoduls (10) kontaktierbaren Seite der ersten und/oder zweiten Druckplatte (26) eine elektrische Isolierung aufweist.

## Claims

1. Gripping device (18) for battery modules (10), comprising a crossbeam (20) with a longitudinal direction of extension, a first gripping element (22), which comprises a first securing element (24) and a first pressure plate (26), and a second gripping element (22), which comprises a second securing element (24) and a second pressure plate (26), wherein the securing elements (24) are designed such that the gripping elements (22) can be secured onto the crossbeam (20), wherein the gripping elements (22) are designed such that a battery module (10) located between the gripping elements (22) can be gripped, wherein when gripping a battery module (10) a first side surface of the battery module (10) can be contacted by the first pressure plate (26) and a second side surface of the battery module (10), which is opposite the first side surface, can be contacted by the second pressure plate (26), wherein the gripping elements (22) and the crossbeam (20) are designed such that the gripping elements (22) can be displaced along the longitudinal direction of extension of the crossbeam (20) and a position of the gripping elements (22) along the longitudinal direction of extension of the crossbeam (20) can be fixed and at least the first gripping element (22) comprises at least one first activating element (34), by means of the activation of which the first pressure plate (26) of the first gripping element (22) can be adjusted in position relative to the first securing element (24) such that pressure can be exerted on the first and second side surface of a battery module (10) located between the first and second pressure plate (26), **characterised in that** the first gripping element (22) comprises a second activating element (36), by means of which the first pressure plate (26) of the first gripping element (22) can be adjusted in position relative to the first securing element (24) such that pressure can be exerted on the first and second side surface of a battery module (10) located between the first and second pressure plate (26), wherein the exertable pressure can be adjusted continually by activating the second activating element (36).

2. Gripping device (18) according to claim 1, **characterised in that** by activating the first activating element (34) the pressure exertable on a battery module (10) can be adjusted in discrete steps.

3. Gripping device (18) according to any of the preceding claims, **characterised in that** the first gripping element (22) comprises a stamp (40) and at least one spring (38), wherein the spring (38) is arranged between the stamp (40) and the first pressure plate (26), wherein the stamp (40) is coupled to the first and second activating element (24; 36) such that by activating the first and/or second activating element (24; 36) the stamp (40) can be displaced in position relative to the first securing element (24) such that pressure can be exerted on the spring (38) by the stamp (40) and pressure can be exerted on the first pressure plate (26) by the spring (38).

4. Gripping device (18) according to claim 3, **characterised in that** the spring stiffness of the at least one spring (38) is such that the force that can be exerted by the first pressure plate on the first side of a battery module (10) is smaller than a predefinable value.

5. Gripping device (18) according to any of the preceding claims, **characterised in that** the first activating element (34) is designed as a lever, which can be activated in a locking manner, so that by activating the lever the first pressure plate (26) can be adjusted in position and the position can be fixed.

6. Gripping device (18) according to any of the preceding claims, **characterised in that** the second activating element (36) is designed as a wheel, the rotation of which adjusts the position of the first pressure plate (26) of the first gripping element (22) relative to the first securing element (24).

7. Gripping device (18) according to any of the preceding claims, **characterised in that** the first and/or the second pressure plate (26) has a shaping (42) which can be inserted into a corresponding counterpart of a side surface to be contacted of a battery module (10) to be gripped.

8. Gripping device (18) according to any of the preceding claims, **characterised in that** the gripping device (18) has an electrical insulation at least on the side of the first and/or second pressure plate (26) which is contactable when lifting a battery module (10) with a side surface of the battery module (10).

## Revendications

1. Dispositif de préhension (18) destiné à des modules de batterie (10),
comportant une barre transversale (20) avec une direction d'extension longitudinale, un premier élément de préhension (22), qui comprend un premier élément de fixation (24) et une première plaque de pression (26), et un deuxième élément de préhension (22), qui comprend un deuxième élément de fixation (24) et une deuxième plaque de pression (26),
dans lequel les éléments de fixation (24) sont réalisés de telle sorte que les éléments de préhension (22) peuvent être fixés à la barre transversale (20),
dans lequel les éléments de préhension (22) sont réalisés de telle sorte qu'un module de batterie (10) se trouvant entre les éléments de préhension (22) peut être pris,
dans lequel, lors de la préhension d'un module de batterie (10), une première surface latérale du module de batterie (10) peut être mise en contact au moyen de la première plaque de pression (26) et une deuxième surface latérale du module de batterie (10), qui est à l'opposé de la première surface latérale, peut être mise en contact au moyen de la deuxième plaque de pression (26),
dans lequel les éléments de préhension (22) et la barre transversale (20) sont réalisés de telle sorte que les éléments de préhension (22) peuvent être déplacés le long de la direction d'extension longitudinale de la barre transversale (20) et une position des éléments de préhension (22) le long de la direction d'extension longitudinale de la barre transversale (20) peut être fixée et qu'au moins le premier élément de préhension (22) comprend au moins un premier élément d'actionnement (34) par l'actionnement duquel la première plaque de pression (26) du premier élément de préhension (22) peut être déplacée de telle manière dans sa position par rapport au premier élément de fixation (24) qu'une pression peut être exercée sur la première et la deuxième surface latérale d'un module de batterie (10) se trouvant entre la première et la deuxième plaque de pression (26),
**caractérisé en ce que** le premier élément de préhension (22) comprend un deuxième élément d'actionnement (36) par l'actionnement duquel la première plaque de pression (26) du premier élément de préhension (22) peut être déplacée de telle manière dans sa position par rapport au premier élément de fixation (24) qu'une pression peut être exercée sur la première et la deuxième surface latérale d'un module de batterie (10) se trouvant entre la première et la deuxième plaque de pression (26),
dans lequel la pression pouvant être exercée est réglable en continu au moyen de l'actionnement du deuxième élément d'actionnement (36).

2. Dispositif de préhension (18) selon la revendication 1, **caractérisé en ce que** la pression pouvant être exercée sur un module de batterie (10) est réglable par étapes discrètes par l'actionnement du premier élément d'actionnement (34).

3. Dispositif de préhension (18) selon l'une quelconque des revendications précédentes,
**caractérisé en ce que** le premier élément de préhension (22) comprend un piston (40) et au moins un ressort (38),
dans lequel le ressort (38) est placé entre le piston (40) et la première plaque de pression (26),
dans lequel le piston (40) est couplé de telle sorte avec le premier et le deuxième élément d'actionnement (24; 36) que, au moyen de l'actionnement du premier et/ou du deuxième élément d'actionnement (24, 36), le piston (40) peut être déplacé de telle manière dans sa position par rapport au premier élément de fixation (24) qu'une pression peut être exercée par le piston (40) sur le ressort (38) et qu'une pression peut être exercée par le ressort (38) sur la première plaque de pression (26).

4. Dispositif de préhension (18) selon la revendication 3, **caractérisé en ce qu'**une raideur de ressort de l'au moins un ressort (38) est dimensionnée de telle sorte qu'une force qui peut être exercée au moyen de la première plaque de pression sur le premier côté d'un module de batterie (10) est inférieure à une valeur pouvant être prescrite.

5. Dispositif de préhension (18) selon l'une quelconque des revendications précédentes, **caractérisé en ce que** le premier élément d'actionnement (34) est réalisé comme un levier qui peut être actionné de manière à s'encliqueter de telle sorte que, par l'actionnement du levier, la première plaque de pression (26) peut être déplacée dans sa position et la position peut être fixée.

6. Dispositif de préhension (18) selon l'une quelconque des revendications précédentes, **caractérisé en ce que** le deuxième élément d'actionnement (36) est réalisé comme une roue par la rotation de laquelle la première plaque de pression (26) du premier élément de préhension (22) peut être déplacée dans sa position par rapport au premier élément de fixation (24).

7. Dispositif de préhension (18) selon l'une quelconque des revendications précédentes, **caractérisé en ce que** la première et/ou la deuxième plaque de pression (26) comporte une bosse (42) qui peut être insérée dans une pièce complémentaire correspondante d'une surface latérale à mettre en contact d'un module de batterie (10) à prendre.

8. Dispositif de préhension (18) selon l'une quelconque des revendications précédentes, **caractérisé en ce que** le dispositif de préhension (18) comporte une isolation électrique au moins au niveau du côté, pouvant être mis en contact avec une surface latérale d'un module de batterie (10) lors du soulèvement du module de batterie (10), de la première et/ou de la deuxième plaque de pression (26).
